# EUROPÄISCHE PATENTSCHRIFT

(11) **EP 2 315 934 B1**
(45) Veröffentlichungstag und Bekanntmachung des Hinweises auf die Patenterteilung: **06.06.2012**
(21) Anmeldenummer: 09780489.2
(22) Anmeldetag: 13.07.2009
(51) Int. Cl.: F03B 13/06, F03D 9/02

(54) **HYDRAULISCHER GROSSENERGIESPEICHER**
HYDRAULIC LARGE-SCALE ENERGY STORAGE UNIT
ACCUMULATEUR HYDRAULIQUE D'ENERGIE DE GRANDE CAPACITE

(30) Priorität: 14.07.2008 DE 102008040393
(43) Veröffentlichungstag der Anmeldung: 04.05.2011
(73) Patentinhaber: Aufleger, Markus, 82547 Beuerberg (DE)
(72) Erfinder: Aufleger, Markus, 82547 Beuerberg (DE)
(74) Vertreter: Kudlek & Grunert Patentanwälte
(86) Internationale Anmeldenummer: PCT/EP2009/058890
(87) Internationale Veröffentlichungsnummer: WO 2010/007013

(56) Entgegenhaltungen:
- EP-A1- 1 637 733
- GB-A- 2 370 614
- GB-A- 2 409 112
- GB-A- 2 452 329
- US-A- 4 031 702
- US-A1- 2002 144 503
- US-A1- 2002 194 847

## Beschreibung

Die Speicherung elektrischer Energie hat große Bedeutung für den Ausgleich der Schwankungen zwischen Strombedarf und Stromproduktion. Infolge der massiv zunehmenden Einspeisungen von Strom aus Windkraftanlagen und den hierdurch weiter verstärkten Netzschwankungen steigt der Bedarf an Regelung und Speicherung. Die wirtschaftlich und technisch bevorzugte Variante der Stromspeicherung und Netzregelung sind Pumpspeicherkraftwerke. Diese bedingen jedoch oft nicht unerhebliche Eingriffe in die Landschaft und sind daher oft mit großen Problemen in den Genehmigungsverfahren verbunden. Die Windkraftanlagen befinden sich insbesondere in küstennahen, flachen Regionen, wo die topographischen Voraussetzungen zum Bau von Pumpspeicherkraftwerken fehlen. Der Einsatz von Pumpspeicherkraftwerken zum überregionalen Ausgleich der windinduzierten Schwankungen beansprucht daher mitunter das Stromnetz in hohem Maße.

Das Prinzip von Pumpspeicherkraftwerken basiert auf einfachen hydraulischen und energetischen Zusammenhängen: In einem oberen Reservoir (OR) und einem unteren Reservoir (UR) befindet sich Wasser. Die Reservoire sind mit einer Leitung, an der sich eine Pumpturbine (PT) oder eine Turbine und eine Pumpe befinden, verbunden. Mittels der Pumpturbine kann Wasser zwischen den beiden Reservoiren hin und her bewegt werden. In Abhängigkeit der Druckverhältnisse wird hierbei entweder Leistung aus dem Stromnetz aufgenommen (Pumpbetrieb) oder an das Netz abgegeben (Turbinenbetrieb).

In der US 2002/0194847 A1, GB 2370 614 A oder US 2002/0144503 A1 wird eine Druckerhöhung durch eine Auflastkonstruktion oder Gasdruck beschrieben.

Erfindungsgemäß wird eine Vorrichtung zur Aufnahme und Abgabe von Energie durch die Bewegung eines Fluids zwischen zwei Reservoiren mittels einer Turbine und einer Pumpe oder einer Pumpturbine mit den Merkmalen des Anspruchs 1 vorgeschlagen.

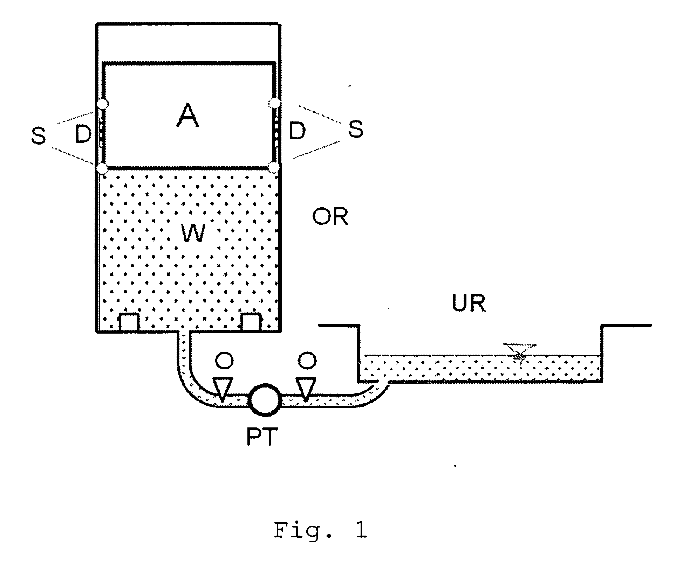

Das Prinzip des Hydraulischen Großenergiespeichers sieht nun vor, dass durch ergänzende Maßnahmen der hydraulische Druck im oberen Reservoir erhöht wird (Fig. 1). Auf diese Weise wird der Platzbedarf deutlich reduziert. Hydraulische Großenergiespeicher können dann unter anderem im Flachland im Umfeld von Windkraftanlagen angeordnet werden oder sogar direkt in die Türme dieser Kraftwerke integriert werden. Aber auch die nicht sichtbare Anwendung im Gebirgsinneren wird unter wirtschaftlichen Gesichtspunkten attraktiver.

Mehrere Ausführungsbeispiele der Erfindung werden nachfolgend anhand verschiedener Zeichnungen näher erläutert. Sie zeigen jeweils stark vereinfachte Darstellungen.
- Fig. 1: zeigt einen hydraulischen Großenergiespeicher mit Auflastkonstruktion in schematischer Ansicht (nicht Gegenstand der Erfindung);
- Fig. 2: zeigt ein oberes Reservoir mit Federkönstruktionen und Trennstrukturen (links: Federkonstruktion mit biegefester Trennstruktur; rechts: Gasdruckfeder mit Trennmembran);
- Fig. 3: zeigt ein oberes Reservoir mit Auflastkonstruktion und Federkonstruktion;
- Fig. 4: zeigt eine kompakte Sonderform mit Auflastkonstruktion ((I) = Allgemein Position; (II) = voller Energieinhalt; (III) = minimaler Energieinhalt); und
- Fig. 5: zeigt eine kompakte Sonderform mit Auflastkonstruktion und Federkonstruktion ((I) = Allgemein Position; (II) = voller Energieinhalt; (III) = minimaler Energieinhalt).

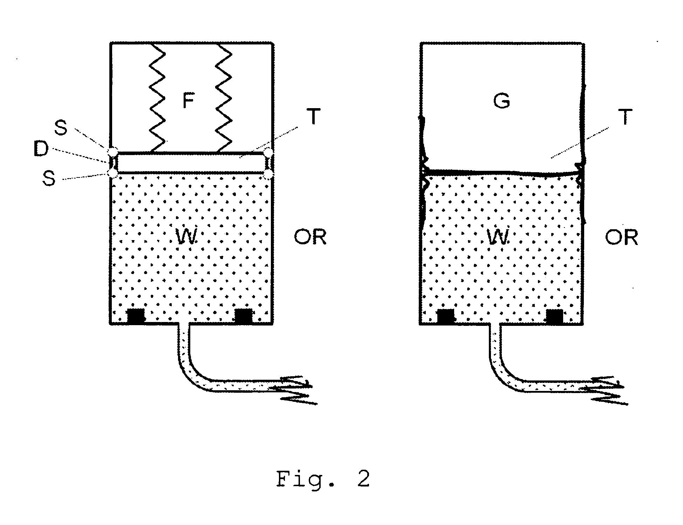

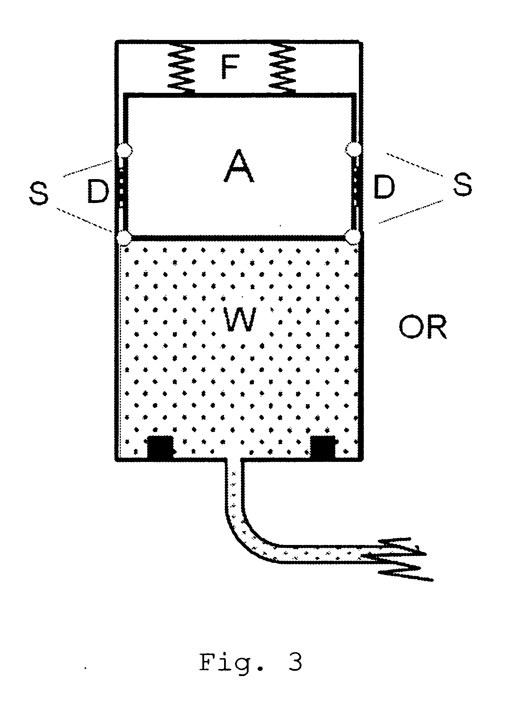

Die Druckerhöhung kann durch eine Federkonstruktion (Fig. 2) oder durch eine Kombination von Auflastkonstruktion und Federkonstruktion erfolgen (Fig. 3). Der Vorteil der Auflastkonstruktion ist die geringere Variabilität des Druckes im oberen Reservoir. Allerdings bedingt die Auflastkonstruktion ein erhebliches Gewicht, woraus ein großer baulicher Aufwand resultieren kann. Der Vorteil einer Federkonstruktion ist der geringere bauliche Aufwand. Allerdings ändert sich der Druck im oberen Reservoir in höherem Maße, woraus erhöhte Anforderungen an die Turbinentechnik resultieren, welche mit variablen Druckhöhen umgehen muss.

Die Federkonstruktion erzeugt bei dem im oberen Reservoir zunehmendem Fluidvolumen im Pumpbetrieb eine Druckerhöhung, wodurch sich das zur Speicherung der Energie notwendige Fluidvolumen reduziert. Die Federkonstruktion kann typischerweise Torsions-, Biege-, Elastomer- oder auch Gasdruckfedern verwenden. Vorzugsweise sind biegefeste Trennstrukturen zur Lastübertragung auf das Fluid zu verwenden. In Fall von Gasdruckfedern und ähnlichen Konstruktionen können auch Membranen als Trennstrukturen eingesetzt werden.

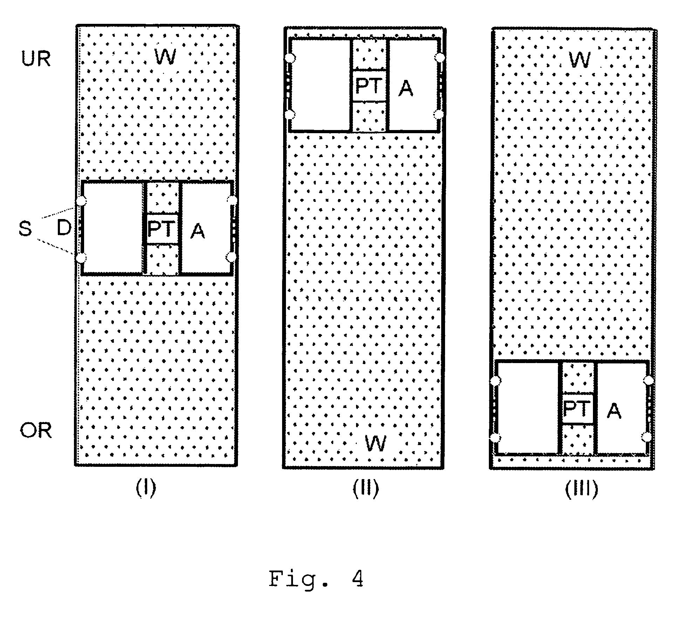

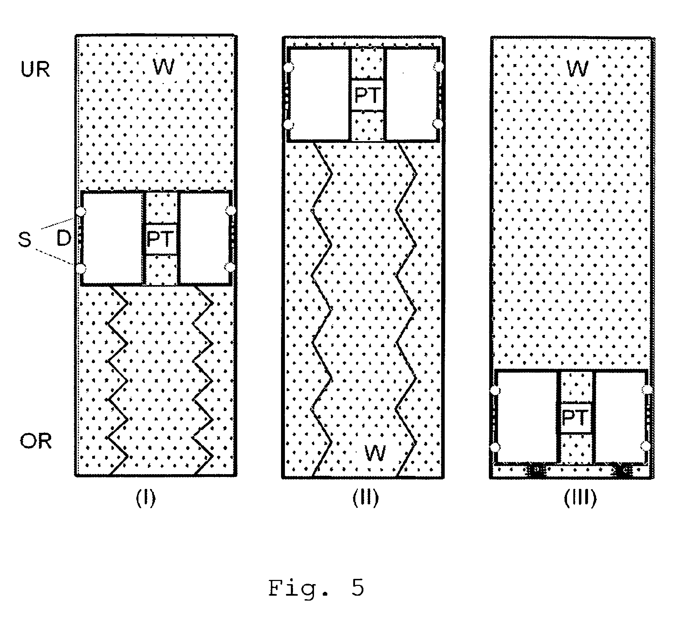

In einer kompakten Sonderbauweise (Fig. 4. und Fig. 5) kann eine Pumpturbine in die Auflastkonstruktion beziehungsweise in die Trennstruktur integriert werden. In diesem Falle wird das Bauteil einschließlich der Maschinentechnik im Pumpbetrieb nach oben beziehungsweise gegen die Federrichtung bewegt. Im Turbinenbetrieb strömt das Fluid aus dem Reservoir mit dem höheren Druck (OR) in das typischerweise darüber angeordnete Reservoir mit dem niedrigeren Druck (UR).

Typischerweise wird Wasser als Fluid verwendet. Infolge des geschlossenen Systems kann auch ein schwereres Fluid eingesetzt werden. Hierdurch können die Abmessungen bei gleicher Leistung der Anlage weiter reduziert werden.

### Bezugszeichenliste

- OR: Oberes Reservoir
- W: Fluid
- UR: Unteres Reservoir
- PT: Pumpturbine
- A: Auflastkonstruktion
- F: Feder
- D: Dichtung
- S: Seitliche Führung
- T: Trennstruktur

## Patentansprüche

1. Vorrichtung zur Aufnahme und Abgabe von Energie durch die Bewegung eines Fluid (W) zwischen zwei Reservoiren mittels einer Turbine und einer Pumpe oder einer Pumpturbine (PT), wobei das jeweils obere Reservoir (OR) aus einem hohen Hohlraum besteht, in welchem über dem Fluid eine Trennstruktur (T, A) angeordnet ist und wobei der Druck in dem oberen Reservoir (OR) durch eine Federkonstruktion (F), welche mit der Trennstruktur (T, A) verbunden ist, erhöht wird, wobei die Federkonstruktion (F) bei Zunahme des Volumens des Fluids (W) eine Druckerhöhung im oberen Reservoir (OR) verursacht.

2. Vorrichtung nach Anspruch 1, **dadurch gekennzeichnet, dass** der Druck in dem oberen Reservoir (OR) zusätzlich durch eine Auflastkonstruktion (A) erhöht wird.

3. Vorrichtung nach Anspruch 2, **dadurch gekennzeichnet, dass** das obere Reservoir (OR) aus einem hohen Hohlraum besteht, in welchem über dem Fluid die Auflastkonstruktion (A) angeordnet ist, welche durch seitliche Führungen (S) entlang des Hohlraums verschiebbar ist und mittels einer umlaufenden Dichtung (D) gegen seitliches Umströmen gesichert ist.

4. Vorrichtung nach einem der Ansprüche 2 bis 3,
**dadurch gekennzeichnet, dass** die Auflastkönstruktion (A) zur Reduzierung der baulichen Abmessungen aus einem möglichst schweren Material besteht.

5. Vorrichtung nach einem der vorstehenden Ansprüche, **dadurch gekennzeichnet, dass** die Federstruktur aus einer Torsions-, Biege- oder Gasdruckfeder besteht.

6. Vorrichtung nach einem der vorstehenden Ansprüche, **dadurch gekennzeichnet, dass** die Trennstruktur (T) biegesteif ist und mittels einer umlaufenden Dichtung gegen seitliches Umströmen gesichert ist.

7. Vorrichtung nach einem der vorstehenden Ansprüche, **dadurch gekennzeichnet, dass** die Trennstruktur (T) bei Gasdruckfedern aus einer Membran (M) besteht, welche das Fluid (W) vom Gas der Gasdruckfeder (G) trennt.

8. Vorrichtung nach einem der vorstehenden Ansprüche, **dadurch gekennzeichnet, dass** an der Auflastkonstruktion (A) die Federkonstruktion (F) angeordnet ist.

9. Vorrichtung zur Aufnahme und Abgabe von Energie durch die Bewegung eines Fluid (W) zwischen zwei Reservoiren mittels einer Turbine und einer Pumpe oder einer Pumpturbine (PT), wobei der Druck in dem jeweils oberen Reservoir (OR) durch eine Auflastkonstruktion (A) erhöht wird und das untere Reservoir (UR) sinngemäß im gleichen Hohlraum getrennt durch die Auflastkonstruktion über dem Oberen Reservoir (OR) angeordnet ist und sich die Pumpturbine (PT) in einer Öffnung der Auflastkonstruktion befindet.

10. Vorrichtung nach Anspruch 9 und einem der Ansprüche 1 bis 8, **dadurch gekennzeichnet, dass** ergänzend zur Auflastkonstruktion (A) eine Federkonstruktion den hydraulischen Druck im oberen Reservoir (OR) erhöht.

11. Vorrichtung nach einem der Ansprüche 1 bis 10, **dadurch gekennzeichnet, dass** der hydraulische Großenergiespeicher im Inneren eines Gebirges errichtet wird.

12. Vorrichtung nach einem der Ansprüche 1 bis 10, **dadurch gekennzeichnet, dass** der hydraulische Großenergiespeicher mit der Tragkonstruktion einer Windkraftanlage kombiniert wird.

## Claims

1. Apparatus for absorbing and releasing energy by the movement of a fluid (W) between two reservoirs by means of a turbine and a pump or a pump turbine (PT), wherein the upper reservoir (OR) in each case consists of a high cavity in which a separating structure (T, A) is arranged above the fluid and wherein the pressure in the upper reservoir (OR) is increased by a spring construction (F) which is connected to the separating structure (T, A), the spring construction (F) causing an increase in pressure in the upper reservoir (OR) as the volume of the fluid (W) increases.

2. Apparatus according to claim 1, **characterised in that** the pressure in the upper reservoir (OR) is additionally increased by a top-loading construction (A).

3. Apparatus according to claim 2, **characterised in that** the upper reservoir (OR) consists of a high cavity in which the top-loading construction (A) is arranged above the fluid, said construction (A) being slidable along the cavity by means of lateral guides (S) and protected from lateral overflow by an encircling seal (D).

4. Apparatus according to one of claims 2 to 3, **characterised in that** the top-loading construction (A) consists of a material that is as heavy as possible, in order to reduce the structural dimensions.

5. Apparatus according to one of the preceding claims, **characterised in that** the spring structure consists of a torsion, flexion or gas pressure spring.

6. Apparatus according to one of the preceding claims, **characterised in that** the separating structure (T) is bending resistant and is protected from lateral overflow by an encircling seal.

7. Apparatus according to one of the preceding claims, **characterised in that** in the case of gas pressure springs the separating structure (T) consists of a membrane (M) which separates the fluid (W) from the gas of the gas pressure spring (G).

8. Apparatus according to one of the preceding claims, **characterised in that** the spring construction (F) is arranged on the top-loading construction (A).

9. Apparatus for absorbing and releasing energy by the movement of a fluid (W) between two reservoirs by means of a turbine and a pump or a pump turbine (PT), wherein the pressure in the upper reservoir (OR) in each case is increased by a top-loading construction (A) and the lower reservoir (UR), similarly separated in the same cavity by the top-loading construction, is arranged above the upper reservoir (OR) and the pump turbine (PT) is located in an opening in the top-loading construction.

10. Apparatus according to claim 9 and one of claims 1 to 8, **characterised in that**, supplementary to the top-loading construction (A), a spring construction increases the hydraulic pressure in the upper reservoir (OR).

11. Apparatus according to one of claims 1 to 10, **characterised in that** the hydraulic large-scale energy store is built inside a rock mass.

12. Apparatus according to one of claims 1 to 10, **characterised in that** the hydraulic large-scale energy store is combined with the support structure of a wind power plant.

## Revendications

1. Dispositif destiné à absorber et libérer de l'énergie par le mouvement d'un fluide (W) entre deux réservoirs au moyen d'une turbine et d'une pompe ou d'une turbine de pompe (PT), dans lequel le réservoir supérieur (OR) dans chaque cas est constitué d'une cavité haute dans laquelle une structure de séparation (T, A) est agencée au-dessus du fluide, et dans lequel la pression dans le réservoir supérieur (OR) est augmentée par une construction à ressort (F) qui est reliée à la structure de séparation (T, A), la construction à ressort (F) entraînant une augmentation de pression dans le réservoir supérieur (OR) lorsque le volume du fluide (W) augmente.

2. Dispositif selon la revendication 1, **caractérisé en ce que** la pression dans le réservoir supérieur (OR) est encore augmentée par une construction de chargement par le dessus (A).

3. Dispositif selon la revendication 2, **caractérisé en ce que** le réservoir supérieur (OR) est constitué d'une cavité haute dans laquelle la construction de chargement par le dessus (A) est agencée au-dessus du fluide, ladite construction (A) pouvant coulisser le long de la cavité au moyen de guides latéraux (S) et étant protégée contre un débordement latéral par un joint périphérique (D).

4. Dispositif selon l'une des revendications 2 à 3, **caractérisé en ce que** la construction de chargement par le dessus (A) est constituée d'un matériau qui est aussi lourd que possible, afin de réduire les dimensions structurelles.

5. Dispositif selon l'une des revendications précédentes, **caractérisé en ce que** la structure à ressort est constituée d'un ressort de torsion, de flexion ou de pression à gaz.

6. Dispositif selon l'une des revendications précédentes, **caractérisé en ce que** la structure de séparation (T) est résistante à la flexion et est protégée contre un débordement latéral par un joint périphérique.

7. Dispositif selon l'une des revendications précédentes, **caractérisé en ce que** dans le cas de ressorts de pression à gaz, la structure de séparation (T) est constituée d'une membrane (M) qui sépare le fluide (W) du gaz du ressort de pression à gaz (G).

8. Dispositif selon l'une des revendications précédentes, **caractérisé en ce que** la construction à ressort (F) est agencée sur la construction de chargement par le dessus (A).

9. Dispositif pour absorber et libérer de l'énergie par le mouvement d'un fluide (W) entre deux réservoirs au moyen d'une turbine et d'une pompe ou d'une turbine de pompe (PT), dans lequel la pression dans le réservoir supérieur (OR) dans chaque cas est augmentée par une construction de chargement par le dessus (A) et le réservoir inférieur (UR), séparé de manière similaire dans la même cavité par la construction de chargement par le dessus, est agencé au-dessus du réservoir supérieur (OR) et la turbine de pompe (PT) est située dans une ouverture dans la construction de chargement par le dessus.

10. Dispositif selon la revendication 9 et l'une des revendications 1 à 8, **caractérisé en ce que**, en complément de la construction de chargement par le dessus (A), une construction à ressort augmente la pression hydraulique dans le réservoir supérieur (OR).

11. Dispositif selon l'une des revendications 1 à 10, **caractérisé en ce que** l'accumulation d'énergie hydraulique à grande échelle est créée à l'intérieur d'une masse rocheuse.

12. Dispositif selon l'une des revendications 1 à 10, **caractérisé en ce que** l'accumulation d'énergie hydraulique à grande échelle est combinée avec la structure de support d'une centrale éolienne.
